# EUROPEAN PATENT APPLICATION

(11) **EP 4 807 667 A1**
(43) Date of publication of application: **16.09.2026**
(21) Application number: 24888452.0
(22) Date of filing: 09.10.2024
(51) Int. Cl.: G06T 7/00, G01M 13/021, G06T 19/00, H04N 23/56, H04N 23/60, H04N 23/63

(54) **GEAR TOOTH CONTACT INSPECTION DEVICE AND METHOD**

(30) Priority: 06.11.2023 JP 2023189270
(71) Applicant: KAWASAKI JUKOGYO KABUSHIKI KAISHA, Kobe-shi, Hyogo 650-8670 (JP)
(72) Inventor: YOSHIKAWA, Keiichi, Hyogo 650-8670 (JP)
(74) Representative: Arnold & Siedsma
(86) International application number: PCT/JP2024/036150
(87) International publication number: WO 2025/100154

(57) **Abstract**

A gear tooth contact inspection apparatus includes a processor configured to: acquire captured image data of a gear including a target tooth surface carrying a tooth contact pattern visualized by a marking paste; generate a gear image including the target tooth surface from the captured image data; acquire 3D model data of the gear; generate AR synthesized data in which the gear image is superimposed on a virtual gear generated from the 3D model data in a three-dimensional coordinate system; and evaluate a tooth contact condition based on a tooth contact region corresponding to the tooth contact pattern in the AR synthesized data.

## Description

### Technical Field

The present disclosure relates to an apparatus used for gear tooth contact inspection and to a tooth contact inspection method using the apparatus.

### Background Art

Gear tooth contact is a factor that influences gear noise, transmitted power, and transmission efficiency. Tooth contact inspection is conducted during the assembly or maintenance of gears. In tooth contact inspection, a worker applies a marking paste to a tooth surface of one gear of a gear pair and brings the gears into mesh. The marking paste rubbed off as a result of operation of the meshing gears, or the marking paste that remains without being rubbed off, is transferred to a tape. The marking paste transferred to the tape is visually inspected to evaluate the centroid and area of tooth contact. However, such a conventional inspection method is disadvantageous in that inspection accuracy may decline due to contamination of the tape to which the marking paste is transferred or due to an indistinct outline of the tooth surface. In addition, the method depends heavily on the skill of the worker. Against this background, quantitative gear tooth contact inspection methods that do not rely on visual sensory evaluation by workers have been proposed.

For example, Patent Literature 1 describes a gear tooth contact inspection method, in which a marking paste is applied to an inspection target surface of a gear to be inspected or to a tooth surface of another gear that meshes with the gear to be inspected, the marking paste remaining on the inspection target surface after being rubbed off due to rotation of the gear pair is transferred to a tape, an image of the tape carrying the transferred marking paste is captured using a camera, and the resulting image data is subjected to image processing using a computer to inspect the tooth contact condition on the inspection target surface.

### Citation List

### Patent Literature

PTL 1: Japanese Laid-Open Patent Application Publication No. 2005-98911

### Summary of Invention

### Technical Problem

However, in the method of Patent Literature 1, the manner in which the region of the inspection target surface is identified remains unclear. Furthermore, it is not possible to obtain information such as the dimensions and position of tooth contact on the tooth surface and errors included in the determined dimensions and position.

The present disclosure has been made in view of the above circumstances, and an object of the present disclosure is to improve accuracy in measuring the dimensions and position of tooth contact on a tooth surface in gear tooth contact inspection.

### Solution to Problem

In order to solve the problem described above, a gear tooth contact inspection apparatus according to one aspect of the present disclosure includes a processor, wherein
the processor is configured to:
acquire captured image data of a gear including a target tooth surface carrying a tooth contact pattern visualized by a marking paste;
generate a gear image including the target tooth surface from the captured image data;
acquire 3D model data of the gear;
generate AR synthesized data in which the gear image is superimposed on a virtual gear generated from the 3D model data in a three-dimensional coordinate system; and
evaluate a tooth contact condition based on a tooth contact region corresponding to the tooth contact pattern in the AR synthesized data.

A tooth contact inspection method according to one aspect of the present disclosure is a gear tooth contact inspection method performed by a computer, the method including:
acquiring captured image data of a gear including a target tooth surface carrying a tooth contact pattern visualized by a marking paste;
acquiring 3D model data of the gear;
generating a gear image including the target tooth surface from the captured image data;
generating AR synthesized data in which the gear image is superimposed on a virtual gear generated from the 3D model data in a three-dimensional coordinate system; and
evaluating a tooth contact condition based on a tooth contact region corresponding to the tooth contact pattern in the AR synthesized data.

### Advantageous Effects of Invention

The present disclosure makes it possible to improve accuracy in measuring the dimensions and position of tooth contact on a tooth surface in gear tooth contact inspection.

### Brief Description of Drawings

FIG. 1 is a functional block diagram of a gear tooth contact inspection apparatus according to one embodiment of the present disclosure.
FIG. 2 is a block diagram showing a schematic configuration of a processor included in the tooth contact inspection apparatus.
FIG. 3 is a flowchart illustrating a process performed by the processor included in the tooth contact inspection apparatus.
FIG. 4 shows an example of a gear image.
FIG. 5 shows an example of AR synthesized data.
FIG. 6 shows an example of AR synthesized data in which a tooth contact region is displayed.

### Description of Embodiments

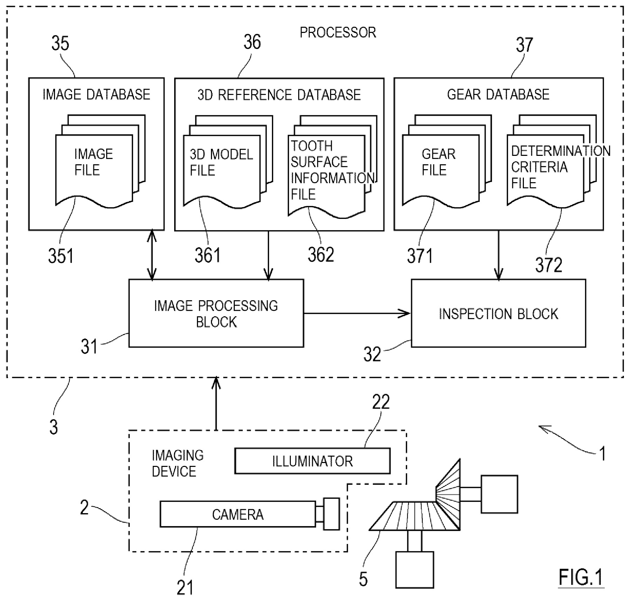

Embodiments of the present disclosure will now be described with reference to the drawings. FIG. 1 is a functional block diagram of a gear tooth contact inspection apparatus 1 according to one embodiment of the present disclosure. The tooth contact inspection apparatus 1 shown in FIG. 1 includes an imaging device 2 and a processor 3. The tooth contact inspection apparatus 1 is configured to inspect the tooth contact of a pair of meshing gears.

### <<Imaging device 2>>

The imaging device 2 includes: a camera 21 that captures an image of a gear 5 to be inspected, which is one gear of a gear pair; and an illuminator 22 that illuminates a field of view of the camera 21.

The camera 21 is mounted, for example, to a casing enclosing the gear 5 via a jig. The camera 21 may be removable from the casing so that the camera 21 can be installed at an appropriate time such as during assembly or maintenance. The field of view of the camera 21 includes at least one tooth surface of the gear 5 to be inspected. For example, the camera 21 is a 2D camera equipped with a CCD; in this case, the camera 21 captures an image and generates two-dimensional captured image data. Alternatively, the camera 21 may be a 3D camera. In such a case, for example, the camera 21 is a stereoscopic 3D camera that captures an image and generates three-dimensional captured image data.

The illuminator 22 emits direct or indirect light toward the field of view of the camera 21. The illuminator 22 includes a light source suitable for the imaging mode of the camera 21. For example, the illuminator 22 is mounted to the casing via a jig, similarly to the camera 21. The illuminator 22 may be integrated with the camera 21 or may be disposed separately from the camera 21.

### <<Processor 3>>

The processor 3 acquires captured image data from the imaging device 2 and processes the captured image data to analyze tooth contact and generate a tooth contact inspection result based on the analysis result. The processor 3 includes functional blocks, including an image processing block 31 that analyzes the tooth contact condition by image processing, and an inspection block 32 that evaluates the tooth contact condition based on the analysis result. The details of processes performed by these functional blocks will be described later.

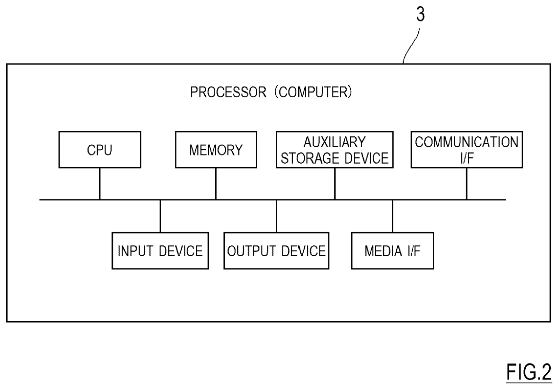

FIG. 2 is a block diagram showing a schematic configuration of the processor 3 included in the tooth contact inspection apparatus 1. As shown in FIG. 2, the processor 3 can be implemented as a computer that includes a CPU (Central Processing Unit), a memory, an auxiliary storage device such as an HDD (Hard Disk Drive), a communication I/F for wired or wireless connection to a network or the imaging device 2, an input device such as a mouse, a keyboard, a touch sensor, or a touch panel, an output device such as a display, and a media I/F for reading information from and writing information to a portable storage medium.

The functions of the processor 3 can be implemented by loading predetermined programs from the auxiliary storage device into the memory and executing the programs via the CPU. Communication between the processor 3 and the imaging device 2 can be established, for example, by the CPU using the communication I/F. The predetermined programs may, for example, be downloaded to the processor 3 from the network via the communication I/F or loaded into the processor 3 from a storage medium connected to the media I/F.

The processor 3 may be located in the vicinity of the imaging device 2 or at a location remote from the imaging device 2. Examples in which the processor 3 is located remotely from the imaging device 2 include a configuration in which the imaging device 2 is disposed at a site of assembly of a product including the gear 5, while the processor 3 is configured on a web server or installed in an office.

Referring back to FIG. 1, an image database 35, a 3D reference database 36, and a gear database 37 are built in the auxiliary storage device of the processor 3.

An image file 351 is stored in the image database 35. In the image file 351, captured image data obtained through image capturing by the imaging device 2 is associated with a gear ID. The gear ID includes information specific to the gear 5, and the use of the gear ID enables identification of the gear 5. The captured image data may include digital data of a captured image and may further include image capturing-related information such as the date of image capturing and color depth. The CPU of the processor 3 acquires the captured image data from the imaging device 2 and stores the acquired data in the image database 35 in association with the gear ID. Based on the gear ID, the CPU of the processor 3 can retrieve the image file 351 containing the captured image data of the gear 5 identified by the gear ID from the image database 35.

A 3D model file 361 is stored in the 3D reference database 36. In the 3D model file 361, 3D model data, which is model data representing a three-dimensional geometry of a tooth surface of the gear 5, is associated with the gear ID. Based on the gear ID, the CPU of the processor 3 can retrieve the 3D model file 361 containing the 3D model data of the gear 5 identified by the gear ID from the 3D reference database 36. The 3D model data of the gear 5 may be data obtained from the actual gear 5 using a three-dimensional scanner, or may be computer-aided design data of the gear 5. The 3D model data may include three-dimensional geometry data of tooth surfaces of all teeth of the gear 5, or may include three-dimensional geometry data of tooth surfaces of one or more teeth arranged in a circumferential direction. For example, when the gear 5 is observed using a non-contact three-dimensional scanner, point cloud data containing positional information (x, y, z) of a tooth surface of the gear 5 in a predetermined three-dimensional coordinate system is obtained, and the point cloud data is polygonized to generate STL data representing the tooth surface geometry. The STL data may be converted into 3D XML data. The STL data or the 3D XML data representing the tooth surface geometry can be used as the 3D model data. The data format of the 3D model data may alternatively be another type of three-dimensional data format.

A tooth surface information file 362 is further stored in the 3D reference database 36. The tooth surface information file 362 contains coordinate information of a ridge line on a tooth surface of the gear 5 and angle-of-view information. These pieces of information are obtained through 3D model mapping and are held in association with the gear ID. The ridge line on the tooth surface is a line drawn along the boundary between the tooth tip (or at least one of the tooth root, the large-diameter end, and the small-diameter end) and the tooth surface. The coordinate information of the ridge line on the tooth surface is generated and updated by the image processing block 31. The angle of view is three-dimensional coordinate information used when a virtual gear described later is displayed on a screen. The angle-of-view information is generated and updated through processing performed by the image processing block 31. The tooth surface information file 362 is used in combination with the 3D model file 361.

A gear file 371 is stored in the gear database 37. The gear file 371 contains product information regarding the gear 5, such as product code information, manufacturer information, structural information including dimensions and the number of teeth, and design drawing information. A single gear file 371 is associated with the gear ID.

A determination criteria file 372 is further stored in the gear database 37. The determination criteria file 372 contains information related to determination criteria used in tooth contact inspection. Data in the determination criteria file 372 may be incorporated into the gear file 371. The determination criteria for tooth contact inspection may vary depending on the product type of the gear 5, or may vary among individual gears 5. In cases where the determination criteria for tooth contact inspection vary depending on the product type of the gear 5, a single determination criteria file 372 is associated with the product type of the gear 5. In cases where the determination criteria for tooth contact inspection vary among individual gears 5, a single determination criteria file 372 is associated with the gear ID.

### <<Tooth contact inspection method>>

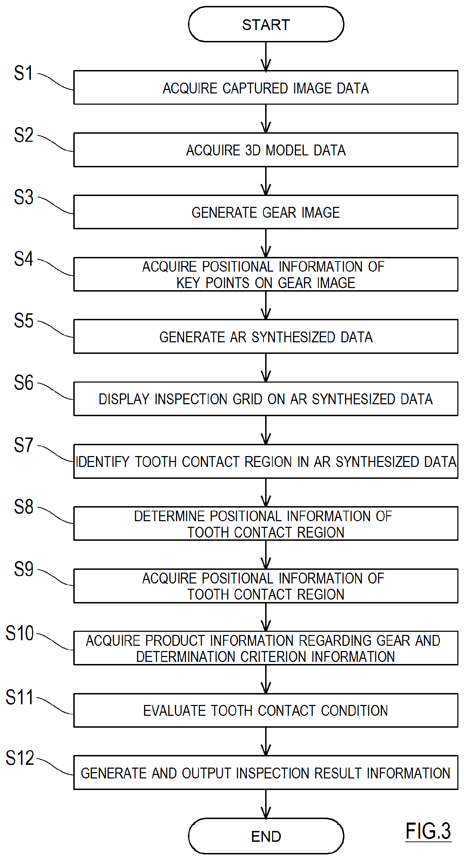

A tooth contact inspection method using the tooth contact inspection apparatus 1 configured as described above will be described below with reference to FIG. 3. FIG. 3 is a flowchart illustrating a process performed by the processor 3 included in the tooth contact inspection apparatus 1.

In the present embodiment, a marking paste is applied to a tooth surface of one gear 5 of a gear pair that is not subjected to inspection. The gear pair is rotated to transfer the marking paste to a tooth surface of the other gear 5 to be inspected. In this manner, a tooth contact pattern of the gear 5 is visualized. Alternatively, the marking paste may be applied to a tooth surface of the gear 5 to be inspected in the gear pair. In this case, a tooth contact pattern of the gear 5 to be inspected is visualized by the marking paste remaining on the tooth surface of the gear 5 after rotation of the gear pair. For convenience of description, the tooth surface to be observed, which carries the tooth contact pattern visualized by the marking paste, will be referred to as the "target tooth surface 50."

The imaging device 2 captures an image of a portion or the entirety of the gear 5 including the target tooth surface 50 and generates captured image data. The captured image data is output from the imaging device 2 to the processor 3 and is stored in the image database 35 as the image file 351 associated with the gear ID.

Based on the gear ID of the gear 5 to be inspected, the image processing block 31 of the processor 3 retrieves the corresponding image file 351 from the image database 35 and acquires the captured image data of the gear 5 (step S1). Furthermore, based on the gear ID of the gear 5 to be inspected, the image processing block 31 retrieves the corresponding 3D model file 361 from the 3D reference database 36 and acquires the 3D model data (step S2). When the tooth surface information file 362 exists, the image processing block 31 retrieves, based on the gear ID of the gear 5 to be inspected, the corresponding tooth surface information file 362 from the 3D reference database 36, and acquires the ridge line coordinate information and the angle-of-view information.

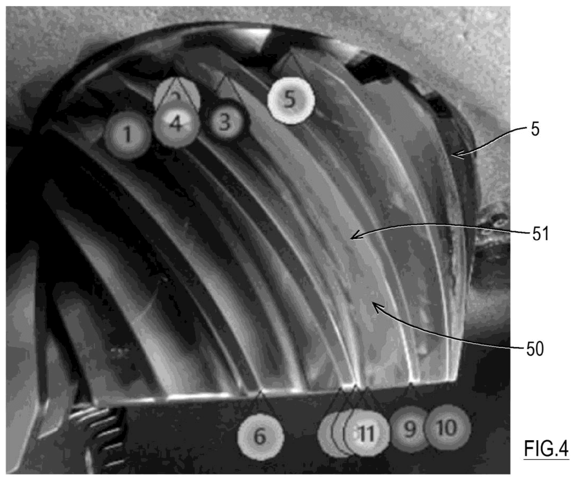

The image processing block 31 generates a gear image including the target tooth surface 50 from the captured image data (step S3) and displays the gear image on a display serving as an output device. To generate the gear image, the image processing block 31 may perform image size adjustment or filtering such as smoothing on the acquired captured image data. Consequently, as illustrated in FIG. 4, the gear image, namely a partial image of the gear 5 that includes the target tooth surface 50, is displayed on the display screen. A tooth contact pattern 51 is visualized by the marking paste on the target tooth surface 50.

A worker sets predetermined key points on the gear image displayed on the display screen through input operations. In FIG. 4, the locations of the key points are indicated by drop-shaped numbered callouts. For example, the worker can set the key points on the gear image by moving a mouse pointer using a mouse serving as an input device or by touching or pressing a touch panel serving as an input device. There are a plurality of key points, and preferably four or more key points are used. The key points preferably include both ends of the tooth tip of the target tooth surface 50 in the tooth trace direction and both ends of the tooth root of the target tooth surface 50 in the tooth trace direction. More preferably, the key points include both ends, in the tooth trace direction, of the tooth tip of each of the adjacent tooth surfaces on both sides of the target tooth surface 50 (i.e., the adjacent tooth surfaces facing in the same rotational direction as the target tooth surface 50) and both ends of the tooth root of each of the adjacent tooth surfaces in the tooth trace direction. The key points may be designated in advance; in this case, the worker sets the designated key points on the gear image.

The image processing block 31 acquires positional information of the key points input on the gear image as described above (step S4). In the present embodiment, the key points are set through input operations performed by the worker. Alternatively, the image processing block 31 may automatically extract key points through image analysis. In such a case, for example, the image processing block 31 extracts an outline of the tooth surface based on factors such as shading contrast in the gear image, and sets predetermined key points on the outline of the tooth surface.

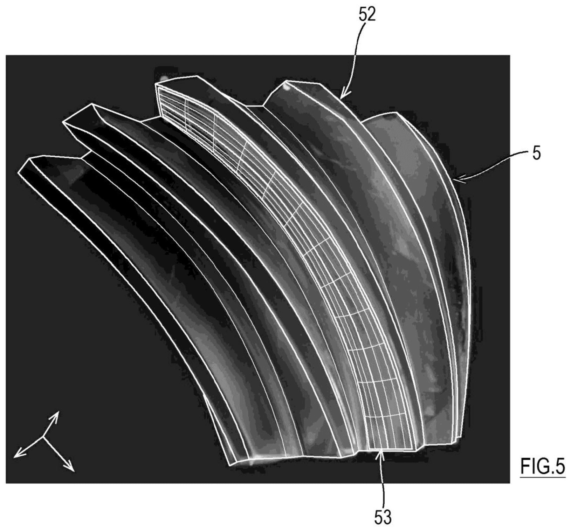

The image processing block 31 uses AR (Augmented Reality) technology to generate AR synthesized data in which the gear image is superimposed on a virtual gear 52 in a three-dimensional coordinate system (step S5), and displays the AR synthesized data on the display screen. As illustrated in FIG. 5, the AR synthesized data displayed on the display screen (i.e., an AR synthesized image) is data in which the real gear image is superimposed on the virtual gear 52. The virtual gear 52 is a three-dimensional gear geometry model generated from the 3D model data. The virtual gear 52 may be a portion of the three-dimensional gear geometry model that includes one to five teeth. Key points corresponding to the key points on the gear image are provided on the virtual gear 52. The key points may be designated on the virtual gear 52 in advance. Alternatively, key points corresponding to the key points on the gear image may be set after the generation of the AR synthesized data. The image processing block 31 maps the real gear image onto the virtual gear 52 such that their respective key points coincide with one another. The image processing block 31 stores, in the tooth surface information file 362 of the 3D reference database 36, coordinate information of a ridge line on a tooth surface of the virtual gear 52 on which the real gear image has been superimposed. Furthermore, the image processing block 31 stores angle-of-view information of the virtual gear 52 on which the real gear image has been superimposed in the tooth surface information file 362 of the 3D reference database 36. The AR processing method for superimposing the displayed real gear image on the virtual gear 52 is not limited to that described above.

The virtual gear 52 in the AR synthesized image is presented, for example, as a transparent or wireframe representation so that the real gear image (in particular, the target tooth surface 50 and the tooth contact pattern 51 on the target tooth surface 50) can be visually recognized. The virtual gear 52 may be selectively displayed in or removed from the AR synthesized image. The image processing block 31 can display an inspection grid 53 for tooth contact inspection on a tooth surface of the virtual gear 52 (step S6). Information for displaying the inspection grid 53 on the display screen is included in the 3D model data. The inspection grid 53 is superimposed on the tooth surface of the virtual gear 52. The inspection grid 53 is composed of, for example, a frame line enclosing the tooth surface of the virtual gear 52 that has been superimposed on the target tooth surface 50, and longitudinal and transverse grid lines located within the frame line. The grid lines include a center line and auxiliary lines, and the spacing between the grid lines may be set based on the determination criteria. For the worker, the inspection grid 53 serves as a reference for the position or size of a tooth surface region carrying the marking paste.

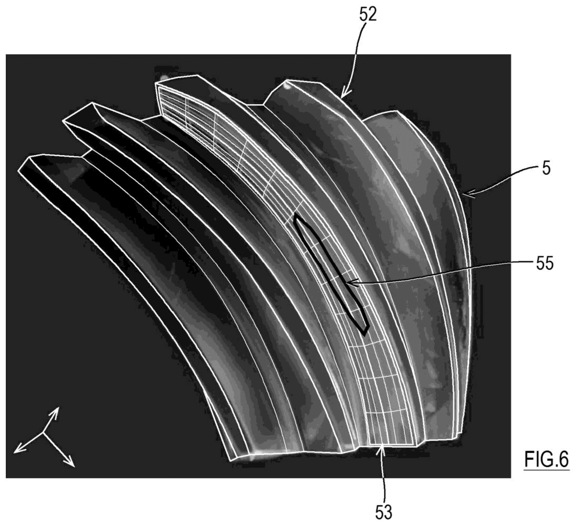

The worker designates a tooth contact region 55 on the AR synthesized data displayed on the display screen through input operations. The tooth contact region 55 is a region defined in the three-dimensional coordinate system, and corresponds to or overlaps with the tooth contact pattern 51 of the real gear image in the AR synthesized data. As illustrated in FIG. 6, the tooth contact region 55 is designated, for example, by specifying the outline of the tooth contact pattern 51 on the AR synthesized data. For example, the worker inputs the locations of points on the outline of the tooth contact pattern 51 appearing in the gear image by moving a mouse pointer using a mouse serving as an input device, or by touching or pressing a touch panel serving as an input device. The image processing block 31 acquires positional information of the points on the outline of the tooth contact pattern 51 in the three-dimensional coordinate system, defines the outline of the tooth contact region 55 by interconnecting the points with lines, and identifies the interior of the defined outline of the tooth contact region 55 as the tooth contact region 55 (step S7). The image processing block 31 determines positional information of the tooth contact region 55 in the three-dimensional coordinate system (step S8), and stores the positional information. In the present embodiment, the tooth contact region 55 is designated through input operations performed by the worker. Alternatively, the tooth contact region 55 may be automatically designated by the image processing block 31. In such a case, for example, the image processing block 31 extracts the outline of the tooth contact pattern 51 on the gear image through image analysis, and designates the interior of the extracted outline as the tooth contact region 55.

The inspection block 32 of the processor 3 acquires positional information of the tooth contact region 55 in the three-dimensional coordinate system (step S9). The inspection block 32 evaluates the tooth contact condition using the inspection grid 53 and the positional information of the tooth contact region 55 in the three-dimensional coordinate system.

The inspection block 32 retrieves, from the gear database 37, the gear file 371 and the determination criteria file 372 which are associated with the gear 5 to be inspected, and acquires pertinent information from these files (step S10). For each tooth contact inspection item, the inspection block 32 determines an evaluation value for the tooth contact condition using a given arithmetic equation, and compares the value with a determination criterion. In this manner, the inspection block 32 automatically evaluates the tooth contact condition (step S11). The inspection block 32 stores the evaluation result. The tooth contact condition may be evaluated as acceptable or unacceptable or may be rated using a numerical score. For example, the inspection block 32 determines the dimensions of the tooth contact region 55 in the tooth trace direction and the tooth depth direction, or determines the area of the tooth contact region 55, based on the inspection grid 53 and the positional information of the tooth contact region 55, and evaluates the tooth contact condition by comparing the determined dimensions or area with a determination criterion. In another example, the inspection block 32 determines the location of the center of the tooth contact region 55 relative to the tooth surface in the tooth trace direction based on the inspection grid 53 and the positional information of the tooth contact region 55, and evaluates the tooth contact condition by comparing the determined location with a determination criterion. The items of tooth contact inspection are determined based on requirements to be satisfied by a product in which the gear is used, and are not limited to those described above. The inspection block 32 may make an overall pass/fail determination based on evaluation results obtained for given tooth contact inspection items. In cases where determination criteria are incorporated into the gear file 371, the tooth contact region 55 and positional information of the tooth contact region 55 (or geometric information of the tooth contact region 55) included as a determination criterion in the gear file 371 may be directly superimposed on each other to make the determination.

The inspection block 32 generates inspection result information using the evaluation result of the tooth contact condition, the generated gear image, the AR synthesized data, gear information, and the like, and outputs the inspection result information (step S12). The inspection result information includes, for example, the gear information, the gear image, the AR synthesized data, evaluation values and determination criteria for individual tooth contact inspection items, and the result of the pass/fail determination. The inspection block 32 can display the generated inspection result information on a display serving as an output device, or can create an inspection result report by outputting the inspection result information through a printer.

### [Overview]

A gear tooth contact inspection apparatus 1 according to a first item of the present disclosure includes a processor 3, wherein
the processor 3 is configured to:
acquire captured image data of a gear 5 including a target tooth surface 50 carrying a tooth contact pattern 51 visualized by a marking paste;
generate a gear image including the target tooth surface 50 from the captured image data;
acquire 3D model data of the gear 5;
generate AR synthesized data in which the gear image is superimposed on a virtual gear 52 generated from the 3D model data in a three-dimensional coordinate system; and
evaluate a tooth contact condition based on a tooth contact region 55 corresponding to the tooth contact pattern 51 in the AR synthesized data.

A gear tooth contact inspection apparatus 1 according to a second item of the present disclosure includes the features of the gear tooth contact inspection apparatus 1 according to the first item, and further includes an imaging device 2 that generates the captured image data.

In the tooth contact inspection apparatus 1 according to the first or second item, the AR synthesized data is data in which a real gear image is superimposed on the virtual gear 52. Even when the outline of a tooth surface or the position and dimensions of the tooth contact pattern 51 on the tooth surface are indistinct in the real gear image, visual information provided by the virtual gear 52 enables clear recognition of the outline of the tooth surface or the position and dimensions of the tooth contact pattern 51. In addition, when a portion of a tooth surface of a gear is not presented in a captured gear image, or when the tooth surface appears distorted in the gear image, it is difficult to accurately identify the dimensions or geometry of the tooth contact pattern 51 on the tooth surface by relying solely on the gear image. In contrast, by superimposing the gear image on the virtual gear 52 created as AR content and using geometric information of the virtual gear 52 to identify the geometry of the tooth surface of the real gear, the dimensions and geometry of the tooth contact pattern 51 can be identified with higher accuracy. Furthermore, the three-dimensional coordinate system in which the virtual gear 52 is generated can be utilized to indicate the position of the tooth contact pattern 51 or measure the dimensions of the tooth contact pattern 51. This enables improved accuracy in measuring the position and dimensions of the tooth contact pattern 51 on the target tooth surface 50.

A gear tooth contact inspection apparatus 1 according to a third item of the present disclosure includes the features of the gear tooth contact inspection apparatus 1 according to the first or second item, wherein the processor 3 is configured to display an inspection grid 53 on the AR synthesized data, the inspection grid 53 including: a frame line enclosing a tooth surface of the virtual gear 52 that overlaps the target tooth surface 50; and grid lines located within the frame line. The grid lines may include a center line and auxiliary lines.

The tooth contact inspection apparatus 1 configured as described above enables a worker to easily and visually recognize the dimensions and position of the tooth contact pattern 51 on a tooth surface based on the inspection grid 53 and the tooth contact pattern 51 which are presented in the AR synthesized data output as an image.

A gear tooth contact inspection apparatus 1 according to a fourth item of the present disclosure includes the features of the gear tooth contact inspection apparatus 1 according to any one of the first to third items, wherein the processor 3 is configured to: identify a region overlapping the tooth contact pattern 51 in the AR synthesized data as the tooth contact region 55; acquire positional information of the tooth contact region 55 in the three-dimensional coordinate system; and evaluate the tooth contact condition based on the positional information of the tooth contact region 55 in the three-dimensional coordinate system.

In the tooth contact inspection apparatus 1 configured as described above, the processor 3 can inspect the tooth contact condition based on the positional information of the tooth contact region 55 without human judgment. This can ensure stable inspection quality.

A gear tooth contact inspection apparatus 1 according to a fifth item of the present disclosure includes the features of the gear tooth contact inspection apparatus 1 according to the fourth item, wherein the processor 3 is configured to: acquire positional information of points on an outline of the tooth contact pattern 51 in the AR synthesized data; define an outline of the tooth contact region 55 by interconnecting the points with lines; and determine the positional information of the tooth contact region 55 from the defined outline of the tooth contact region 55.

Excess marking paste may adhere to the tooth surface in addition to the marking paste forming the tooth contact pattern 51, and analysis performed by the processor 3 on the state of adhesion of the marking paste in order to extract the tooth contact pattern 51 may be cumbersome. Even in such a situation, the tooth contact inspection apparatus 1 configured as described above enables simplification of the process, since the processor 3 can acquire positional information input by a worker for points on the outline of the tooth contact pattern 51 while the worker views the AR synthesized data output as an image.

A gear tooth contact inspection apparatus 1 according to a sixth item of the present disclosure includes the features of the gear tooth contact inspection apparatus 1 according to any one of the first to fifth items, wherein the processor 3 is configured to automatically make a determination as to the tooth contact condition by acquiring determination criterion information regarding the tooth contact condition and comparing the tooth contact region 55 with the determination criterion information.

The tooth contact inspection apparatus 1 configured as described above can automatically determine whether the tooth contact condition of the gear 5 is acceptable or unacceptable, or assign a rating to the tooth contact condition.

A gear tooth contact inspection apparatus 1 according to a seventh item of the present disclosure includes the features of the gear tooth contact inspection apparatus 1 according to any one of the first to sixth items, wherein the processor 3 is configured to output inspection result information including an evaluation result of the tooth contact condition and the AR synthesized data.

The tooth contact inspection apparatus 1 configured as described above enables the automation of preparation of an inspection result report. Furthermore, the inspection result information may be accumulated, and the accumulated information may be used to improve reproducibility or ensure traceability.

A gear tooth contact inspection method according to an eighth item of the present disclosure is a gear tooth contact inspection method performed by a computer (specifically, the processor 3), the method including:
acquiring captured image data of a gear 5 including a target tooth surface 50 carrying a tooth contact pattern 51 visualized by a marking paste;
generating a gear image including the target tooth surface 50 from the captured image data;
acquiring 3D model data of the gear 5;
generating AR synthesized data in which the gear image is superimposed on a virtual gear 52 generated from the 3D model data in a three-dimensional coordinate system; and
evaluating a tooth contact condition based on a tooth contact region 55 corresponding to the tooth contact pattern 51 in the AR synthesized data.

In the gear tooth contact inspection method described above, the AR synthesized data is data in which a real gear image is superimposed on the virtual gear 52. Even when the outline of a tooth surface or the position and dimensions of the tooth contact pattern 51 on the tooth surface are indistinct in the real gear image, visual information provided by the virtual gear 52 enables clear recognition of the outline of the tooth surface or the position and dimensions of the tooth contact pattern 51. In addition, when a portion of a tooth surface of a gear is not presented in a captured gear image, or when the tooth surface appears distorted in the gear image, it is difficult to accurately identify the dimensions or geometry of the tooth contact pattern 51 on the tooth surface by relying solely on the gear image. In contrast, by superimposing the gear image on the virtual gear 52 created as AR content and using geometric information of the virtual gear 52 to identify the geometry of the tooth surface of the real gear, the dimensions and geometry of the tooth contact pattern 51 can be identified with higher accuracy. Furthermore, the three-dimensional coordinate system in which the virtual gear 52 is generated can be utilized to indicate the position of the tooth contact pattern 51 or measure the dimensions of the tooth contact pattern 51. This enables improved accuracy in measuring the position and dimensions of the tooth contact pattern 51 on the target tooth surface 50.

The functionality disclosed herein and implemented by the processor 3 may be implemented using circuitry or processing circuitry which includes general purpose processors, special purpose processors, integrated circuits, ASICs (Application Specific Integrated Circuits), CPUs (Central Processing Units), conventional circuitry and/or combinations thereof which are programmed to perform the disclosed functionality. Processors are considered circuitry or processing circuitry as they include transistors and other circuitry therein. Processors may be programmed processors that carry out programs stored in a memory. In the present disclosure, the circuitry, units, or means are hardware that carry out or are programmed to perform the recited functionality. The hardware may be any hardware disclosed herein or otherwise any hardware which is programmed or known to carry out the recited functionality. When the hardware is a processor which may be considered a type of circuitry, the circuitry, means, or units are a combination of hardware and software, the software being used to configure the hardware and/or processor.

The foregoing discussion on the present disclosure is merely illustrative and explanatory, and is not intended to limit the present disclosure to the modes described herein. For example, although the foregoing detailed description presents various features of the present disclosure together in a single embodiment in order to streamline the disclosure, only some of the described features may be combined. The features disclosed herein may be combined into alternative embodiments, configurations, or aspects other than those discussed above.

### Reference Signs List

1: tooth contact inspection apparatus
2: imaging device
3: processor
5: gear
50: target tooth surface
51: tooth contact pattern
52: virtual gear
53: inspection grid
55: tooth contact region

## Claims

1. A gear tooth contact inspection apparatus comprising a processor, wherein
the processor is configured to:
acquire captured image data of a gear including a target tooth surface carrying a tooth contact pattern visualized by a marking paste;
generate a gear image including the target tooth surface from the captured image data;
acquire 3D model data of the gear;
generate AR synthesized data in which the gear image is superimposed on a virtual gear generated from the 3D model data in a three-dimensional coordinate system; and
evaluate a tooth contact condition based on a tooth contact region corresponding to the tooth contact pattern in the AR synthesized data.

2. The gear tooth contact inspection apparatus according to claim 1, further comprising an imaging device that generates the captured image data.

3. The gear tooth contact inspection apparatus according to claim 1, wherein
the processor is configured to display an inspection grid on the AR synthesized data, the inspection grid including:
a frame line enclosing a tooth surface of the virtual gear that overlaps the target tooth surface; and
grid lines located within the frame line.

4. The gear tooth contact inspection apparatus according to claim 1 or 3, wherein
the processor is configured to:
identify a region overlapping the tooth contact pattern in the AR synthesized data as the tooth contact region;
acquire positional information of the tooth contact region in the three-dimensional coordinate system; and
evaluate the tooth contact condition based on the positional information of the tooth contact region in the three-dimensional coordinate system.

5. The gear tooth contact inspection apparatus according to claim 4, wherein
the processor is configured to:
acquire positional information of points on an outline of the tooth contact pattern in the AR synthesized data;
define an outline of the tooth contact region by interconnecting the points with lines; and
determine the positional information of the tooth contact region from the defined outline of the tooth contact region.

6. The gear tooth contact inspection apparatus according to claim 1, wherein
the processor is configured to automatically make a determination as to the tooth contact condition by acquiring determination criterion information regarding the tooth contact condition and comparing the tooth contact region with the determination criterion information.

7. The gear tooth contact inspection apparatus according to claim 1, wherein
the processor is configured to output inspection result information including an evaluation result of the tooth contact condition and the AR synthesized data.

8. A gear tooth contact inspection method performed by a computer, the method comprising:
acquiring captured image data of a gear including a target tooth surface carrying a tooth contact pattern visualized by a marking paste;
acquiring 3D model data of the gear;
generating a gear image including the target tooth surface from the captured image data;
generating AR synthesized data in which the gear image is superimposed on a virtual gear generated from the 3D model data in a three-dimensional coordinate system; and
evaluating a tooth contact condition based on a tooth contact region corresponding to the tooth contact pattern in the AR synthesized data.
